# EUROPEAN PATENT APPLICATION

(11) **EP 3 936 555 A1**
(43) Date of publication of application: **12.01.2022**
(21) Application number: 20184345.5
(22) Date of filing: 06.07.2020
(51) Int. Cl.: C08J 3/18, C08K 5/053, C08L 29/04, B29C 48/00, B29C 48/345, B29C 48/385, B29C 48/92, B29B 9/06

(54) **PLASTICISED POLYVINYL ALCOHOL MIXTURE AND METHOD FOR MAKING IT.**

(71) Applicant: Aquapak Polymers Limited, Birmingham B313HE (GB)
(72) Inventor: ASHWORTH, Robert, Colwyn Bay, Conwy, LL28 5YX (GB); GRIFFITHS, Sian, Glan Conwy, Conwy, LL28 5LU (GB); WILLIAMS, John, Chirbury, Shropshire, SY15 6UD (GB)
(74) Representative: Hepworth Browne

(57) **Abstract**

The invention describes a method for the manufacture of a plasticised polyvinyl alcohol polymer mixture, the method comprising the steps of:
introducing a polyvinyl alcohol polymer comprising polyvinyl alcohol or a blend thereof having a degree of hydrolysis in the range of 93wt% to less than 98wt% into a mixing reactor;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid and a plasticiser to the chamber to form a reaction mixture;
wherein the plasticiser is selected from the group consisting of:
pentaerythritol
tripentaerythritol (TPE)
neopentyl glycol (NPG)
trimethylol propane (TMP)
trimethylol ethane (TME)
di(trimethylol propane) (DTMP)
2,2 - diethyl-1,3-propanediol (DEPD)
itaconic acid and its salts
and mixtures thereof
wherein the blending chamber comprises a plurality of heated regions arranged so that the mixture is subjected to a temperature profile whereby the temperature increases from the inlet to the outlet;
a secondary outlet located between the reaction zone and primary outlet arranged to allow removal of processing aid from the chamber;
reacting the processing agent, plasticiser and polymer in the reaction zone to form plasticised polymer; and
allowing the plasticised polymer mixture to pass from the primary outlet.

## Description

This invention relates to a process for manufacture of polyhydric polymers, particularly polyvinyl alcohol. The invention also relates to apparatus for use in carrying out the method. The invention further relates particularly but not exclusively to a method of manufacture of polyvinyl alcohol in a suitable physical form for processing into film or other extruded products. The invention further relates to a novel processable polyvinyl alcohol composition which may be made using the process.

Polyvinyl alcohol is commonly made by hydrolysis of polyvinyl acetate. The degree of hydrolysis affects the properties of the polymer. Polyvinyl alcohol having a low degree (LD) of hydrolysis, below 84%, is widely used in industry.

Highly hydrolysed polyvinyl acetate, that is with a degree of hydrolysis greater than 98%, is a co-polymer which essentially comprises homo-polyvinyl alcohol. This polymer, similar to many carbohydrates, decomposes before its melting point of about 250°C is reached. This makes melt processing difficult and for this reason the highly hydrolysed polymer is generally processed as an aqueous solution. Partially hydrolysed polyvinyl acetate is readily melt processed. For example, 80% hydrolysed polyvinyl acetate, which is clearly a polyvinyl alcohol co-polymer, can be readily extruded or converted into film by blow molding.

The significant difference between highly hydrolysed (high degree of hydrolysis, HD) and partially hydrolysed (low degree of hydrolysis, LD) polyvinyl alcohols is the extent and quality of the crystalline order due to the differences in the chain structures. Polyvinyl alcohols with less than 2% non-hydrolysed acetate groups can readily crystallise to form strongly hydrogen bonding crystalline domains. These crystalline domains have a structure which is essentially the same as found in polyethylene. The reason for this may be attributed to the small size of the hydroxyl group. However, because of the hydrogen bonding, the melting point of highly hydrolysed polyvinyl alcohol is about 150°C higher than that of polyethylene. Polyols have been used as plasticisers, but efficient manufacture of plasticised polyvinyl alcohol with a high degree of hydrolysis has been difficult to achieve.

WO2017/046361 discloses a method for manufacture of a plasticised polyvinyl alcohol having a degree of hydrolysis of 98wt% or higher.

According to a first aspect of the present invention, there is provided a method for the manufacture of a plasticised polyvinyl alcohol polymer mixture, the method comprising the steps of:
introducing a polyvinyl alcohol polymer comprising polyvinyl alcohol or a blend thereof having a degree of hydrolysis in the range of 93wt% to 98wt% into a mixing reactor;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid and a plasticiser to the chamber to form a reaction mixture;
wherein the plasticiser is selected from the group consisting of:
   pentaerythritol
   sorbitol
   mannitol
   tripentaerythritol (TPE),
   neopentyl glycol (NPG),
   trimethylol propane (TMP),
   trimethylol ethane (TME),
   di(trimethylol propane) (DTMP),
   2,2-diethyl-1,3-propanediol (DEPD),
   itaconic acid and its salts;
   and mixtures thereof;
   wherein the blending chamber comprises a plurality of heated regions arranged so that the mixture is subjected to a temperature profile whereby the temperature increases from the inlet to the outlet;
   a secondary outlet located between the reaction zone and primary outlet arranged to allow removal of processing aid from the chamber;
   reacting the processing agent, plasticiser and polymer in the reaction zone to form plasticised polymer; and
   allowing the plasticised polymer mixture to pass from the primary outlet.

Use of a reactive mixer in accordance with this invention allows the processing aid and plasticiser to be reacted with the polyvinyl alcohol or blend thereof, followed by removal of all or most of the processing aid from the secondary outlet to give plasticised polyvinyl alcohol or a blend thereof.

The polyvinyl alcohol polymer may comprise polyvinyl alcohol or a blend thereof wherein the polyvinyl alcohol polymer has a degree of hydrolysis of 93wt% to less than 98wt%, preferably 93 wt% to 97 wt%, alternatively 93wt% to 95wt%.

The polyvinyl alcohol may be manufactured by hydrolysis of polyvinyl acetate, wherein the extent of hydrolysis is in the range from 93wt% up to 98wt%, alternatively 93wt% to less than 98wt%, alternatively 93wt% to 97wt%, alternatively 93wt% to 95wt%.

A blend of two or more polyvinyl alcohol polymers may be employed, for example a blend of two polyvinyl alcohol polymers with a high molecular weight and a low molecular weight respectively.

For example a blend may comprise a low viscosity grade having a molecular weight in the range 13000 to 27000 and a degree of polymerisation of 300 - 600 and a medium - high viscosity grade having a molecular weight in the range 107000 to 120000 and a degree of polymerisation of 2400 to 2600.

Use of a blend may allow control of the viscosity of the polymer. Selection of stabilisers in accordance with the present invention allows use of blends of a desired viscosity without a loss of other properties. Alternatively, use of a blend may permit use of polyvinyl alcohol with one or more stabilisers while maintaining viscosity or other properties to permit manufacture of pellets or films.

The processing aid is preferably water. Alternatively, the processing aid may comprise a mixture of water and one or more hydroxyl compound with a boiling point less than the boiling point or melting point of the plasticiser. Use of water is preferred for cost and environmental reasons.

Plasticisers may be selected from the group consisting of: tripentaerythritol, neopentyl glycol, trimethylol ethane, di-(trimethylol propane), 2,2-diethyl-1,3-propanediol, itaconic acid and salts thereof, trimethylol propane, and mixtures thereof.

Use of pentaerythritol as a plasticizer may be disadvantageous as surface bloom may develop during secondary processing, for example during film blowing or pelletization, particularly in high humidity conditions.

Combinations of two or more plasticizers have been found to be advantageous, for example, combinations of two of the plasticizers listed above.

Combinations of trimethylol propane (TMP), pentaerithrytol or neopentyl glycol (NPG) may have superior properties which allow use of a wider range of processing conditions without degradation of the polymer composition. The pellet manufacturing process may be more stable, allowing a wider range of processing temperatures. Secondary processing, e.g. film formation, may be carried out under a wider range of conditions, e.g. a wider range of temperature conditions. A combination of pentaerythritol and TMP in a ratio from about 2:1 to about 4:1, preferably about 3:1, may be used. However, in embodiments, this combination may result in an inhomogeneous formulation.

Plasticizers which do not include pentaerythritol may be advantageous. TMP may be used as a sole plasticizer. Alternatively, TMP may be used in combination with one or more alternative plasticizers, for example NPG. Use of alternative plasticizers to replace pentaerythritol may enable optimization of glass transition temperature, T_{g}, melting point, Tm and crystallinity. Use of alternative plasticizers not containing pentaerythritol may provide lower degradation during extrusion.

In exemplary embodiments thin films of melt processed polyvinyl alcohol formulations remain clear and do not show a whitening effect after exposure to humidity. Use of an appropriate lubricant may provide films with improved visual appearance. An exemplary lubricant is sodium benzoate. In less advantageous formulations formation of an opaque, hazy or white film after a 24-hour humidity test may indicate that phase separation has occurred.

Films containing the plasticisers of this invention provide films which may exhibit complete clarity after a 24-hour humidity test.

A ratio of pentaerythritol to trimethylol propane of about 3:1 by weight, may be employed.

A ratio of trimethylol propane to neopentyl glycol of about 3:1 to about 1:3, preferably about 2:1 to about 1:2, particularly 1:1 by weight may be employed.

Further additives may be used, including antioxidants, lubricants, dyes and pigments. Exemplary additives include metal salts of C₁₄, C₁₆ and C₁₈ fatty acids, sodium benzoate, potassium sorbate. An amount of less than 1 wt% may be used.

Exemplary lubricants may be selected from the group consisting of:
calcium stearate,
stearic acid,
sodium stearate,
potassium oleate,
sodium benzoate,
and mixtures thereof.

Use of these lubricants may result in an advantageous reduction in the extent of degradation during melt processing. Sodium benzoate has been found to be particularly effective.

The processing temperature may have a maximum of about 260°C, dependent on dwell time in the higher temperature zones of the extruder.

Preferred solid plasticizers may also be volatile under processing conditions at the processing temperature. Preferred plasticizers have a melting point in the range of about 150°C to about 300°C, typically about 150°C to about 275°C.

A solution of the plasticiser in water may be injected through a single secondary inlet.

A solid plasticizer may be fed independently or together with one or more of the polymeric materials of the formulation.

In an exemplary embodiment, the mixing reactor comprises a twin screw extruder. Alternatively, the mixing reactor may comprise a batch reactor for smaller scale processes. The mixing reactor should have a high internal surface area to allow efficient heat dissipation.

The extruder reactor chamber may be composed of 5-20 heated regions, typically 10-15, more preferably about 12 regions. The temperature profile may rise from ambient temperature at the first region to 200°C adjacent the outlet. The reaction zone may have a temperature of 260°C.

The location of the reaction zone may be controlled by selection and adjustment of one or more of: the screw configuration, the formulation, the temperature profile, rotational speed of the one or more screws (depending on reactor type) and the rate of feed of the reaction mixture into the apparatus. The location of the reaction zone may be determined by the temperature as measured by one or more thermocouples or other temperature sensors located arranged along the length of the chamber. In a preferred embodiment, the reaction zone is controlled so that it is located prior to the secondary outlet, upstream of the primary outlet. The location of the reaction zone may be adjusted so that the reaction is complete prior to venting.

Energy provided by the application of shear forces and control of the temperature of the polymer mixture allows control of the chemical energetics of the exothermic reaction between the processing aid and the hydrogen bonded crystalline domains of the polymer following commencement of the exothermic reaction. Failure to affect adequate temperature control may lead to decomposition and even carbonisation of the polymer mixture.

In a preferred embodiment, the configuration of the screws, typically co-rotating closely intermeshing twin screws of a twin screw extruder, may be as follows.

A conveying section may be provided at the throat or inlet of the extruder. The feed rate should be regulated so that the throat is not overfed. The conveying section is followed by an intensive mixing zone, followed in turn by a conveying section which forms the reaction zone. In the reaction zone, the reaction goes essentially to completion. This is followed by an intensive mixing section in which the reaction is driven fully to completion. Following the intensive mixing section, there is a low pressure zone where venting is allowed. A compression zone then feeds the mixture to a dye, pump or simple screw extruder.

In an embodiment having 12 temperature zones, the zones may have the following set temperatures:-
1. 120°C
2. 145°C
3. 195°C
4. 220°C
5. 250°C
6. 260°C
7. 260°C
8. 250°C
9. 220°C
10. 200°C
11. 155°C
12. 150°C

The temperature of the reaction mixture may not be the same as the set point values because of mechanical heating stemming from the mixing process, shear heating effects and the reaction exotherm and the poor heat transfer to coolant in a steel reaction vessel. Those skilled in the art are capable of judging the appropriate processing conditions.

An intensive mixing region may be provided downstream of the reaction zone to ensure completion of the reaction of the processing aid and polymer. In a preferred embodiment, the intensive mixing region may comprise a paddle mixer located between the reaction zone and the secondary outlet. The mixing region may be a kneading region comprising pairs of inter-engaging rotor blades or paddles.

Preferred mixing reactors are self-cleaning in use. Co-rotating intermeshing screws as used in twin screw extruders may be employed. The stated operating conditions may be employed using appropriate start-up and shut-down procedures.

For start-up, a completely empty and clean extruder barrel may be used. Polymeric powder feed is started, followed by the water or processing aid and plasticiser either simultaneously or successively. The initial feed rate and screw rotation are lower than the steady state speeds. In the case where the die is connected directly to the twin screw extruder, once a coherent strand is produced the feed rate and screw speeds are raised to the steady state conditions. The fitting of a dry face cutter or strand pelletiser is carried out in the usual way known to those skilled in the art. When a single screw is employed, this must be empty and connected to the twin screw extruder prior to start-up.

Pre-flushing with standard flushing agents such as low density polyethylene, high density polyethylene or polypropylene, whether filled or unfilled, is neither necessary nor desirable when using the process of the present invention. When the die is attached to the single screw extruder pelletiser filling is as described above.

In order to provide a clean extruder for a subsequent start-up, the shut-down procedure may involve stripping all feeds and reducing all screw speeds and continued running until as much material as possible has been delivered. Where the twin screw extruder is coupled to a single screw extruder or other form of melt pump, the twin screw may be decoupled from the single screw and the die may also be uncoupled. The die is placed in a heated oven at 300-450°C to burn off any remaining polymer or soaked in hot water until the polymer dissolves or becomes swollen so that it can be readily removed mechanically. The temperature of the decoupled twin screw extruder may be then lowered to a uniform 100-110°C with rotation of the screws so that the residual polymer is ejected as crumb-like material until the barrels are empty. The barrel may be then polished by feeding some of the dried powdered polymer. After the polishing stage, the final residual material is ejected.

In the case of a single screw extruder, the optimal processing temperature of about 200°C is maintained. If a closed barrel extruder is used, the screws may be decoupled and removed slowly without cooling. The polymer is pulled from the screws as it is withdrawn from the barrel. This affords a clean screw. If a clam-shell single screw extruder is used, the casing may be opened and the polymer removed quickly while hot before removing the heated screws. The barrel may be cleaned with a wire brush during cooling. Flushing the extruder barrels with a purged material is neither necessary nor effective.

The secondary outlet may be a vent permitting volatile processing aids, for example steam, to be completely or partially removed from the polymer mixture.

When water is the processing aid, the water content of the plasticised polymer may be less than 5 wt%, preferably less than 2 wt%, more preferably not more than 0.5 wt%.

In an alternative embodiment, an inlet for the processing aid is located upstream of the inlet for the plasticiser. This allows the polymer to mix with the processing aid before the plasticiser is introduced. Without wishing to be bound by theory it is believed that the molecules of a plasticiser such as neopentyl glycol may be slow to break into the crystalline domains of the polyvinyl alcohol. Energy provided by the application of shear forces to and control of the temperature of the polymer mixture allows control of the chemical energetics of the exothermic reaction between the processing aid and the hydrogen bonded crystalline domains of the polymer following commencement of the exothermic reaction. Failure to effect adequate control may lead to degradation and even carbonisation of the polymer.

The rate of rotation of the twin screws may be regulated to control the specific energy per unit length of the reactive mixing chamber so that the screws serve as energy input devices.

In a typical embodiment, the chamber of the mixing reactor may be 30%-70% filled with the polymer mixture with the remaining volume being empty or serving as a lower pressure zone to facilitate devolatilisation. Consequently the rate of output of polymer from the primary outlet may not be consistent and may be pulsed. A compaction zone may be employed to provide a continuous output.

In a preferred embodiment, the mixing reactor is a twin screw extruder having a preferred length to diameter ratio in the range 25:1 to 50:1, preferably about 25:1 to 45:1, more preferably about 40:1. For example a typical mixer reactor may have two 95mm diameter screws with a length of 4.8 metres.

The primary outlet may comprise a die, for example a multistrand die.

Alternatively, in an advantageous embodiment of the invention, a pump may be provided downstream of the primary outlet. The pump may comprise a single screw extruder unit. The configuration and speed of rotation of the single screw may be selected so that the pump is full of plasticised polymer during use. In this way the screw serves as a variable pump which is controllable to provide a constant flow of polymer to a die located downstream of the reactive mixer.

Application of shear by mixing a temperature controlled mixture of polyvinyl alcohol and water, or other processing aid, gives rise to an exothermic reaction which when properly controlled serves to reduce or destroy crystallinity of the high degree of hydrolysis polyvinyl alcohol. Without wishing to be bound by theory, it is believed that lattice energy of the crystalline polyvinyl alcohol is released by the introduction of hydrogen bonding due to incorporation of water, or other processing aid, into the polymer mixture.

The onset of the exothermic reaction may be controlled by selection of the temperature profile and shear rate applied in the twin screws. The extent of the exothermic reaction may be controlled by the rate of heat removal from the mixer, by the composition and feed rate of the reaction mixture, and by regulation of the shear energy input and location of the reaction zone. The location of the reaction zone at which the exothermic reaction occurs may be controlled by appropriate control of the temperature profile and rate of rotation.

The boiling point of the processing aid is preferably selected so that it is less than the temperature of the reaction and mixing zones, permitting venting of excess processing aid from the polymer mixture.

The mean residence time in the mixer may be about 2-10 minutes, preferably about 5 minutes. The residence time in the reactor is preferably sufficient to allow completion of the reaction so that a viscoelastic melt is obtained with a minimum amount of unreacted polyvinyl alcohol.

The percentages referred to in this specification may be selected from any of the ranges quoted to total 100%. Percentages or other quantities used in the specification are by weight unless indicated otherwise.

In particularly advantageous embodiments, the polyvinyl alcohol consists of a blend of two or more polyvinyl alcohol polymers each having a degree of hydrolysis of 93% to 98%, preferably one with a high molecular weight and at least one low molecular weight polyvinyl alcohol. In a preferred embodiment, the polymer comprises 80% high molecular weight polyvinyl alcohol and 20% low molecular weight polyvinyl alcohol. The ratio of high to low molecular weight molecular polyvinyl alcohol may be 2:1 to 10:1, preferably 3:1 to 7:1, more preferably 6:1 to 4:1, most preferably about 5:1.

The high molecular weight polymer may have a molecular weight of 60000 to 120000.

The lower molecular weight polymer may have a molecular weight of 5000 to 30000.

The blends of different molecular weight polymers employed are selected in accordance with the physical properties required in the finished product. This may require different molecular weight materials being used. Use of more than two different molecular weight polymers may be advantageous. The use of a single molecular weight polymer is not precluded.

A cooling chamber may be located downstream of the die. This may comprise a system of moving rollers located in a controlled atmosphere arranged so that the polymer strands emerging from the die are maintained under appropriate tension as they cool and solidify prior to pelletization.

According to a second aspect of the present invention there is provided a polyvinyl alcohol polymer composition comprising;
a polyvinyl alcohol polymer or blend thereof having a degree of hydrolysis in the range from 93wt% to 98wt%;
a plasticiser in a range from 6 to 15wt%,
wherein the plasticiser is selected from a group consisting of: pentaerythritol, tripentaerythritol, neopentyl glycol, trimethylol propane, trimethylol ethane, di(trimethylol propane, 2,2 - diethyl-1,3-propanediol, itaconic acid and its salts, and mixtures thereof; and
having a water content in the range of 0.1 to 0.5 wt%;
wherein in the polymer is a viscoelastic thermoplastic material.

The polyvinyl alcohol composition of this invention provides many advantages in relation to previously used compositions. Exemplary embodiments are extrudable and can be used for making pellets and films.

The invention is further described by means of example but not in any limitative sense with reference to the accompanying drawings, of which;
Figure 1 is a diagrammatic representation of a twin screw system in accordance with this invention fitted with a dry face cutter pelletiser unit;
Figure 2 is a diagrammatic representation of the twin screw system fitted with a strand pelletiser unit; and
Figure 3 shows typical screw design functions and temperatures in different zones of an extruder for pellet manufacture;

Batch blending may be carried out using a Brabender batch blender fitted with instruments to measure torque and temperature as a means of formulation development. The blender may be fitted with two closely intermeshing screw mixers. The mixing behaviour is similar to that using a twin screw extruder as described below, but is less intensive. The stirrer speed is controlled. The initial temperature is also controlled. Because of the thermal mass of the steel mixer, reactions are carried out in a pseudo-adiabatic manner.

When the stirring is started with the mixture at 95°C there was a short quiescent period before both the observed torque and temperature rose sharply over a period of less than two minutes. The temperature rise in this example was about 60°C with an accompanying rise in torque of 100%. The torque fell once the maximum temperature had been achieved. The torque and temperature profile observed are a function of stirred speed, initial starting temperature and formulation composition. The data are helpful in designing formulations which allow reactive extrusion to be carried out without a runaway exotherm leading to carbonisation of the materials during the reaction. The thermal changes observed were a function of the morphological change in the polymer and the secondary bond interactions between the reactants. The torque change was dependent on the physical change in the reactants from a slurry of polymer in the water-glycerol medium to a viscoelastic fluid once the chemical reaction had taken place. The viscoelastic thermoplastic material can be used for pellet manufacture.

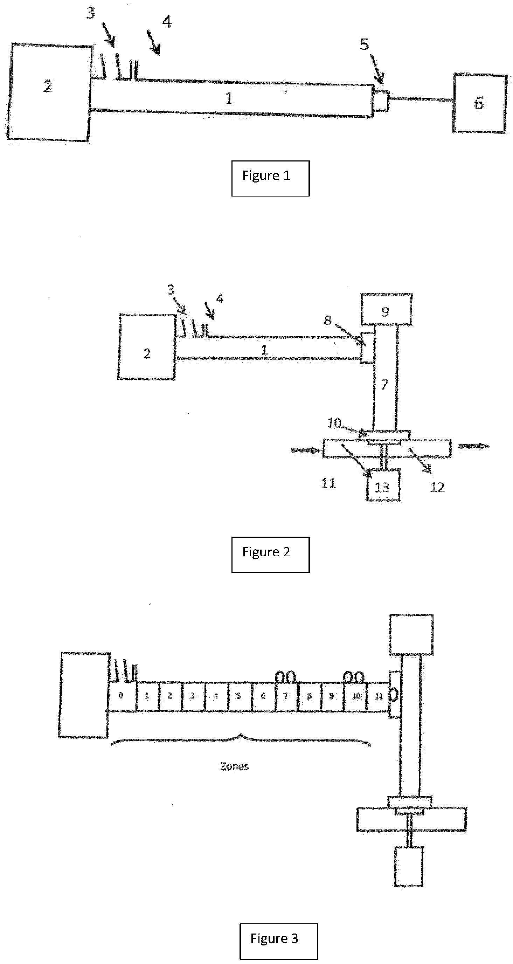

Figures 1 to 3 illustrate extruder configurations in accordance with the present invention.

Figure 1 is a diagrammatic representation of a twin screw extruder system fitted with a dry face-cutter pelletiser unit. A co-rotating screw extruder (1) was fitted with closely intermeshing screws with a L:D ratio greater than 40:1. The barrels were fitted with both heating and cooling apparatus. The screws are driven by an electrical drive motor (2). A solid feed port (3) is located vertically or laterally of the extruder barrel (1). A liquid feed port (4) is located either vertically or laterally downstream of the solid feed port (3). A single or multiple cavity die (5) provides a strand of reacted polymeric material to cutter blades (6) powered by a dry face-cutter unit (7). The cutter blades (6) are located within vertically extending ducting (8). An upwardly directed cooled airflow within the ducting carries pellets away from the cutter unit for collection.

Figure 2 shows a twin screw system fitted with a strand pelletiser unit. The extruder motor and feed ports are the same as for the Figure 1 embodiment. A single screw extruder (10) or other pump capable of delivering hot viscoelastic polymer is driven by an electrical motor (11). The single screw extruder (10) delivers the reacted polymer to a single or multiple cavity die (12) to form a single strand or multiple strands (13). The strand or strands are delivered to a pelletiser unit (14).

Figure 3 illustrates the configuration of the temperatures of the screw in the zones of the extruder. Zone 1, having a temperature of 120°C, is a feed region with a conveyor screw for conveying material to intensive mixing region (2) having a temperature of 145°C. Zone 3, having a temperature of 195°C, is a reaction region with conveyance screw members either with or without back mixing. Zone 4, having a temperature of 220°C, is an intensive mixing region arranged so that reaction goes to at least partial completion. Zone 5 having a temperature of 250°C, is a low pressure region with controlled venting to allow removal of volatiles. Zones 6, 7 and 8 having temperatures of 220°C, 250°C and 250°C, form a conveyance region with pumping into either a die or single screw extruder. Where a single screw extruder is used, zones 9 and 10, having temperatures of 220 and 200°C provide additional residence time for reaction completion and for delivery of materials through a die for pelletisation. Zone 12 comprises the die for which the temperature may be 150°C.

## Claims

1. A method for the manufacture of a plasticised polyvinyl alcohol polymer mixture, the method comprising the steps of:
introducing a polyvinyl alcohol polymer comprising polyvinyl alcohol or a blend thereof having a degree of hydrolysis in the range of 93wt% to 98wt% into a mixing reactor;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid and a plasticiser to the chamber to form a reaction mixture;
wherein the plasticiser is selected from the group consisting of:
pentaerythritol
sorbitol
mannitol
tripentaerythritol (TPE)
neopentyl glycol (NPG)
trimethylol propane (TMP)
trimethylol ethane (TME)
di(trimethylol propane) (DTMP)
2,2 - diethyl-1,3-propanediol (DEPD)
itaconic acid and its salts
and mixtures thereof
wherein the blending chamber comprises a plurality of heated regions arranged so that the mixture is subjected to a temperature profile whereby the temperature increases from the inlet to the outlet;
a secondary outlet located between the reaction zone and primary outlet arranged to allow removal of processing aid from the chamber;
reacting the processing agent, plasticiser and polymer in the reaction zone to form plasticised polymer; and
allowing the plasticised polymer mixture to pass from the primary outlet.

2. The method as claimed in claim 1, wherein the processing aid is water, or a mixture of water and one or more C₁-C₄ alcohols.

3. The method as claimed in claim 1 or 2; wherein the polyvinyl alcohol has a degree of hydrolysis 93wt% to less than 98wt%, preferably 93wt% to 97wt%.

4. The method as claimed in claim 3, wherein the polyvinyl alcohol has a degree of hydrolysis of 93wt% to 95wt%.

5. The method as claimed in any preceding claim, wherein the polyvinyl alcohol is a blend.

6. The method as claimed in claim 5, wherein, the polyvinyl alcohol is a blend of a low viscosity grade having a molecular weight in the range 13000 to 27000 and a degree of polymerisation of 300 - 600 and a medium - high viscosity grade having a molecular weight in the range 107000 to 120000 and a degree of polymerisation of 2400 to 2600.

7. The method as claimed in any preceding claim, wherein the plasticiser is selected from the group consisting of: tripentaerythritol, neopentyl glycol, trimethylol ethane, di-(trimethylol propane), 2,2-diethyl-1,3-propanediol, itaconic acid and its salts, trimethylol propane, and mixtures thereof.

8. A method as claimed in any preceding claim, wherein the plasticiser is a combination of two plasticisers.

9. A method as claimed in claim 7 or 8 , wherein the plasticiser is a combination including trimethylol propane.

10. A method as claimed in claim 9, wherein the plasticiser is a combination of trimethylol propane and pentaerythritol or neopentyl glycol.

11. A method as claimed in claim 10 , wherein the ratio of pentaerythritol to trimethylol propane is from 2:1 to 4:1, for example about 3:1.

12. A method as claimed in claim 10, wherein the ratio of trimethylol propane to neopentyl glycol is 3:1 to 1:3, preferably 2:1 to 1:2.

13. A method as claimed in any preceding claim, wherein the composition includes a lubricant selected from the group consisting of: calcium stearate, stearic acid, sodium stearate, potassium oleate, sodium benzoate and mixtures thereof.

14. A polyvinyl alcohol polymer composition comprising;
a polyvinyl alcohol polymer or blend thereof having a degree of hydrolysis in the range from 93wt% to less than 98wt%;
a plasticiser in a range from 6 to 15wt%,
wherein the plasticiser is selected from a group consisting of: pentaerythritol, tripentaerythritol, neopentyl glycol, trimethylol propane, trimethylol ethane, di(trimethylol propane, 2,2 - diethyl-1,3-propanediol, itaconic acid and its salts, and mixtures thereof; and
having a water content in the range of 0.1 to 0.5 wt%;
wherein in the polymer is a viscoelastic thermoplastic material.

15. A polyvinyl alcohol polymer composition manufactured by the method as claimed in any of claims 1 to 13.
